# EUROPEAN PATENT APPLICATION

(11) **EP 4 230 339 A1**
(43) Date of publication of application: **23.08.2023**
(21) Application number: 21880132.2
(22) Date of filing: 13.10.2021
(51) Int. Cl.: B23K 26/00, B23K 26/14

(54) **LASER PROCESSING DEVICE AND NOZZLE INSPECTION METHOD**

(30) Priority: 14.10.2020 JP 2020173386; 10.05.2021 JP 2021079943
(71) Applicant: Amada Co., Ltd., Isehara-shi, Kanagawa 259-1196 (JP)
(72) Inventor: IWATA, Kazuhiro, Isehara-shi, Kanagawa 259-1196 (JP)
(74) Representative: Grünecker Patent- und Rechtsanwälte PartG mbB
(86) International application number: PCT/JP2021/037821
(87) International publication number: WO 2022/080394

(57) **Abstract**

A laser processing device (91) includes a nozzle (151) attached to a laser processing head (15) and including an emission hole (152) through which a laser beam (LB) is emitted, an optical element (54) configured to directly face the emission hole (152) when the laser processing head (15) is at a predetermined position, a nozzle inspection device (5) including an image pickup device (58) for picking up, through the optical element (54), an image (61) of the emission hole (152) viewed from a direction of an optical axis (CL2) of the laser beam (LB), a gas blowing unit (FK) for blowing a gas (AG) toward the optical element (54), and an operation control unit (41) configured to cause the gas (AG) to be blown from the gas blowing unit (FK) toward the optical element (54) before the image pickup device (58) picks up the image (61) after the laser processing head (15) is moved to the predetermined position.

## Description

### Technical Field

The present invention relates to a laser processing device and a nozzle inspection method.

### Background Art

Japanese Patent Application Laid-Open Publication No. 2017-148814 (Patent Literature 1) describes a nozzle inspection device for inspecting a state of a processing nozzle in a laser processing machine. The nozzle inspection device includes a screen that converts a laser beam, which is emitted from an emission hole of the processing nozzle, into a visible beam, a camera that picks up an image containing the laser beam, which is converted into the visible beam by the screen, and the emission hole from a side opposite to the processing nozzle with respect to the screen, and an image analysis device that performs analysis and the like of the image picked up by the camera.

With this configuration, the nozzle inspection device described in Patent Literature 1 evaluates the shape of the emission hole, the position of the laser beam with respect to the emission hole, and the like, so as to determine the quality of the state of the processing nozzle.

Generally, in the laser processing machine, the screen of the nozzle inspection device is arranged in a posture in which the central axis, which is the optical axis of the laser beam, is in the vertical direction, and the laser beam is emitted downward from the processing nozzle and made incident to a top surface of the screen. In other words, the top surface of the screen is opened, to which dust and dirt are likely to adhere.

If the laser beam is made incident on the top surface of the screen with the adhering dust, so-called burning occurs, and turbidity or fogging due to the burning may be reflected in the image picked up by the camera, which may affect the result of image analysis. Further, the dust and the dirt on the top surface of the screen may be reflected in the image as they are, and this may affect the result of image analysis depending on the size of the dust and the position or degree of the dirt.

Therefore, the conventional nozzle inspection device frequently requires maintenance work of removing the dust and the dirt on the top surface of the screen for cleaning, and improvement in maintainability is desired.

### Summary

### Technical Problem

According to the present invention, it is possible to provide a laser processing device and a nozzle inspection method that are highly maintainable.

### Solution to Problem

One aspect of the present invention is a laser processing device including a laser processing head, a nozzle attached to the laser processing head and including an emission hole through which a laser beam is emitted, an optical element configured to directly face the emission hole when the laser processing head is at an inspection position, a nozzle inspection device including an image pickup device configured to pick up, through the optical element, an image of the emission hole viewed from a direction of an optical axis of the laser beam, a gas blowing unit configured to blow a gas toward the optical element, and an operation control unit configured to cause the gas to be blown from the gas blowing unit toward the optical element before the image pickup device picks up the image after the laser processing head is moved to the inspection position.

According to this aspect, the laser processing device having high maintainability can be obtained.

One aspect of the present invention is a nozzle inspection method of inspecting, with a nozzle inspection device, a nozzle attached to a laser processing head and including an emission hole through which a laser beam is emitted, the nozzle inspection method including making the nozzle inspection device include an optical element directly facing the emission hole when the laser processing head is moved to a predetermined position and an image pickup device configured to pick up, through the optical element, an image of the emission hole viewed from a direction of an optical axis of the laser beam, and causing a gas to be blown toward the optical element from the emission hole or a gas nozzle arranged outside of the laser processing head at least before causing the image pickup device to pick up the image after the laser processing head is moved to the predetermined position.

According to this aspect, a nozzle inspection method having high maintainability can be obtained.

One aspect of the present invention is a nozzle inspection method of inspecting, with a nozzle inspection device, a nozzle attached to a laser processing head and including an emission hole through which a laser beam is emitted, the nozzle inspection method including making the nozzle inspection device include an optical element directly facing the emission hole when the laser processing head is moved to a predetermined position, an image pickup device configured to pick up, through the optical element, an image of the emission hole viewed from a direction of an optical axis of the laser beam, and a cover configured to cover the optical element, and also making the nozzle inspection device movable between an accommodation position at which the optical element is accommodated inside of the cover and an inspection position corresponding to the predetermined position at which the optical element is protruded from the cover, blowing a gas from a gas blowing unit toward the optical element when at least the optical element is at the inspection position, and causing the image pickup device to pick up the image after the laser processing head is moved to the predetermined position and the gas is blown.

According to this aspect, a nozzle inspection method having high maintainability can be obtained.

### Advantageous Effect of Invention

According to one aspect of the present invention, an effect of being highly maintainable can be obtained.

### Brief Description of Drawings

[Figure 1] Figure 1 is a perspective view showing an overall configuration of a laser processing device 91, which is an embodiment of a laser processing device according to an embodiment of the present invention.
[Figure 2] Figure 2 is an enlarged perspective view showing a nozzle inspection device 5 and a vicinity thereof in the laser processing device 91.
[Figure 3] Figure 3 is a sectional view showing a configuration of the nozzle inspection device 5.
[Figure 4] Figure 4 is a top surface view of a vicinity of a beam incident unit 53 of the nozzle inspection device 5.
[Figure 5] Figure 5 is a diagram showing an image 61 picked up by an image pickup device 58 of the nozzle inspection device 5.
[Figure 6] Figure 6 is a flow chart illustrating a first embodiment of a nozzle inspection method according to the embodiment of the present invention.
[Figure 7] Figure 7 is a flow chart illustrating a second embodiment of the nozzle inspection method according to the embodiment of the present invention.
[Figure 8] Figure 8 is diagram showing an assist gas blowing unit FK of the laser processing device 91 and a modification thereof in which Figure 8(a) is a side view showing the assist gas blowing unit FK, and Figure 8(b) is a side view showing an assist gas blowing unit FKA of a first modification.
[Figure 9] Figure 9 is a sectional view showing a blow gas blowing unit FKB of a second modification of the assist gas blowing unit FK.
[Figure 10] Figure 10 is a diagram showing a nozzle inspection device 5B including a blow gas blowing unit FKC of the second modification of the assist gas blowing unit FK in which Figure 10(a) is a perspective view of the nozzle inspection device 5B in a state in which a cover 511 thereof is removed, and Figure 10(b) is a view seen from an arrow Ya in Figure 10(a).
[Figure 11] Figure 11 is a diagram illustrating a state of entry and exit of an inspection main body unit 52 with respect to a base 512 in the nozzle inspection device 5B in which Figure 11(a) shows an accommodation state at a position corresponding to the base 512, and Figure 11(b) shows a state at an inspection position at which the inspection main body unit 52 is protruded to the left from the base 512.
[Figure 12] Figure 12 is an assembly drawing for describing a configuration of a cover 511D included in a nozzle inspection device 5D.
[Figure 13] Figure 13 is a diagram showing a cover plate 515 included in the cover 511D in which Figure 13(a) is a bottom surface view, and Figure 13(b) is a sectional view taken along positions S13b-S13b in Figure 13(a).
[Figure 14] Figure 14 is a perspective view of the nozzle inspection device 5D in a state in which the cover 511D thereof is removed.
[Figure 15] Figure 15 is a sectional view taken along positions S15-S15 in Figure 14.
[Figure 16] Figure 16 is a diagram showing a state in which the inspection main body unit 52D is at the inspection position at which the inspection main body unit 52D is protruded to the left, as compared with Figure 15.
[Figure 17] Figure 17 is a three-surface diagram showing a blow block 59 included in the nozzle inspection device 5D in which Figure 17(a) is a front surface view, Figure 17(b) is a sectional view taken along positions S17b-S17b in Figure 17(a), and Figure 17(c) is a bottom surface view.
[Figure 18] Figure 18 is a schematic plan view showing a result of simulation of a gas flow blown from the blow block 59.
[Figure 19] Figure 19 is a schematic sectional view taken along positions S19-S19 in Figure 18.
[Figure 20] Figure 20 is a flow chart illustrating procedure 3 of a nozzle inspection operation, which is a modification of the nozzle inspection method of the second embodiment.

### Description of Embodiment

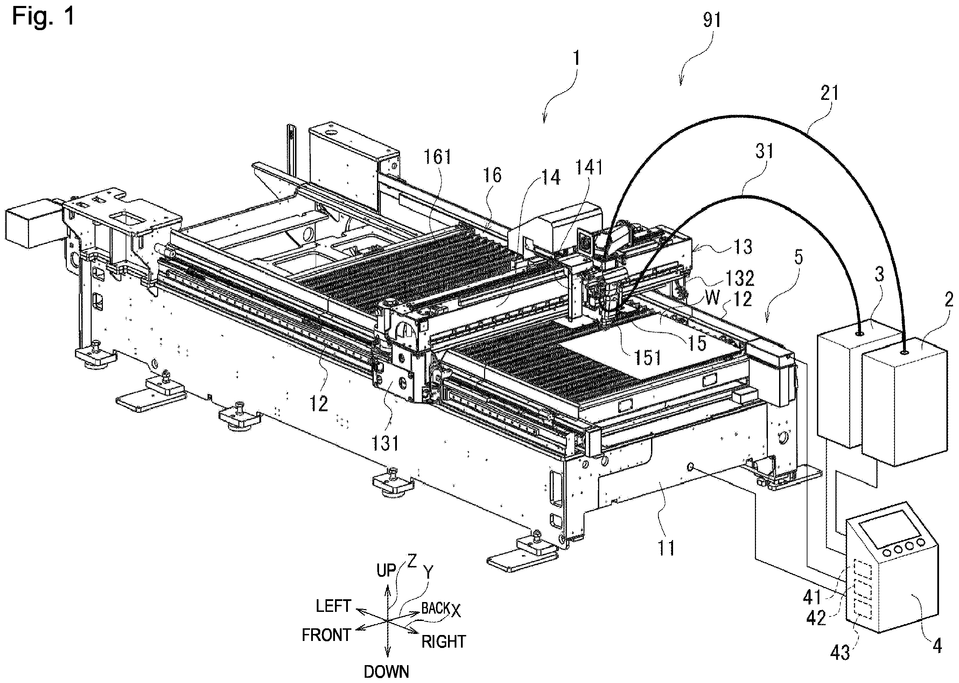

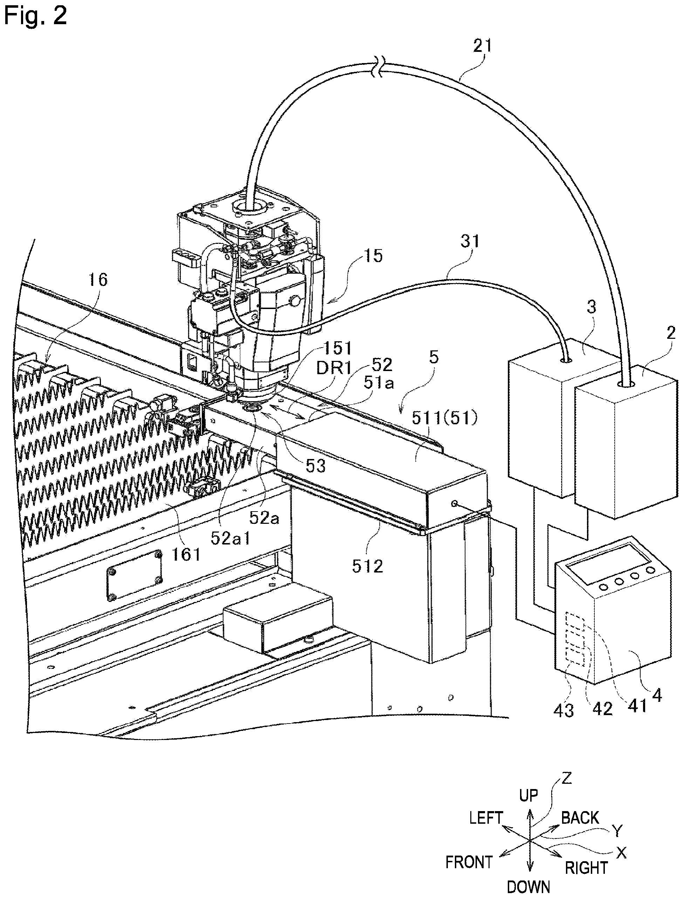

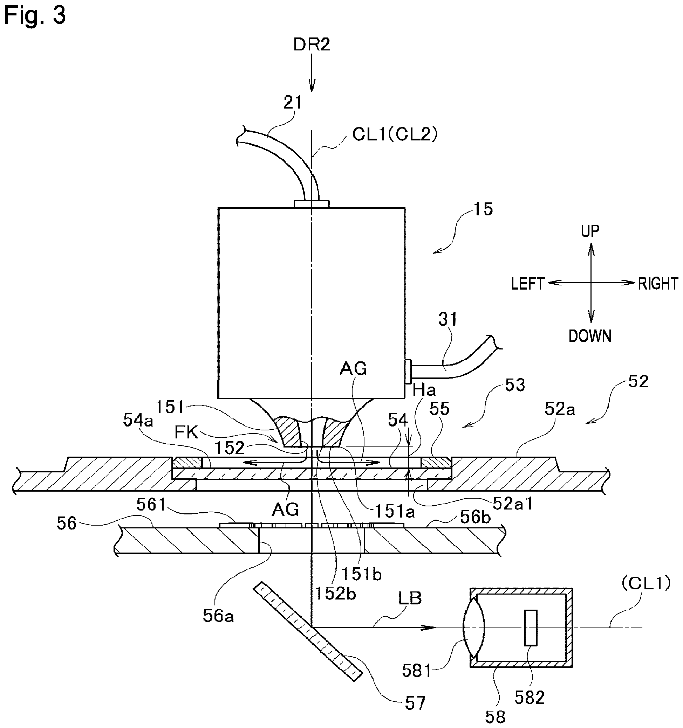

Figure 1 is a perspective view showing a laser processing device 91, which is an embodiment of a laser processing device according to an embodiment of the present invention. For convenience of explanation, the left-right direction, the front-back direction, and the up-down direction are defined in the directions of the arrows in Figure 1. The left-right direction is the X-axis, the front-back direction is the Y-axis, and the up-down direction is the Z-axis. Figure 2 is an enlarged perspective view showing a nozzle inspection device 5 included in the laser processing device 91 and a vicinity thereof. Figure 3 is a sectional view showing a configuration of the nozzle inspection device 5.

As shown in Figure 1, the laser processing device 91 is configured to include a processing machine main body 1, a laser oscillator 2, an assist gas supply device 3, a control device 4, and a nozzle inspection device 5.

The processing machine main body 1 includes a base frame 11, a guide rail 12, a carriage 13, a laser processing head 15, and a processing table 16.

The processing table 16 is provided to the base frame 11. On the processing table 16, a plurality of plate-shaped skids 161 extending in the front-back direction are lined up upright in the left-right direction. The plurality of skids 161 horizontally support a mounted plate-shaped workpiece W.

A pair of guide rails 12 are respectively arranged on a front edge portion and a back edge portion of the base frame 11 in such a manner as to extend in the left-right direction.

The carriage 13 is stretched over the pair of guide rails 12 and 12 in such a manner as to extend in the front-back direction. The carriage 13 includes columns 131 and 132 respectively supported on the pair of guide rails 12 and 12 so as to be movable in the left-right direction, and a gate-shaped beam 14 supported by the columns 131 and 132 and extending in the front-back direction.

A head carriage 141 is supported on the beam 14 so as to be movable in the front-back direction.

The laser processing head 15 is supported by the head carriage 141 so as to be movable in the up-down direction.

A laser beam and an assist gas are supplied from an outside to the laser processing head 15. As shown in Figure 3, a nozzle 151 including an emission hole 152 is detachably attached to a tip end of the laser processing head 15.

In Figure 1, the laser beam is supplied from the laser oscillator 2 to the laser processing head 15 via a delivery fiber 21, and is emitted downward as a laser beam LB from the emission hole 152 of the nozzle 151 as shown in Figure 3.

An assist gas AG is supplied from the assist gas supply device 3 to the laser processing head 15 via a gas hose 31, and is blown downward from the emission hole 152 in the nozzle 151 as shown in Figure 3.

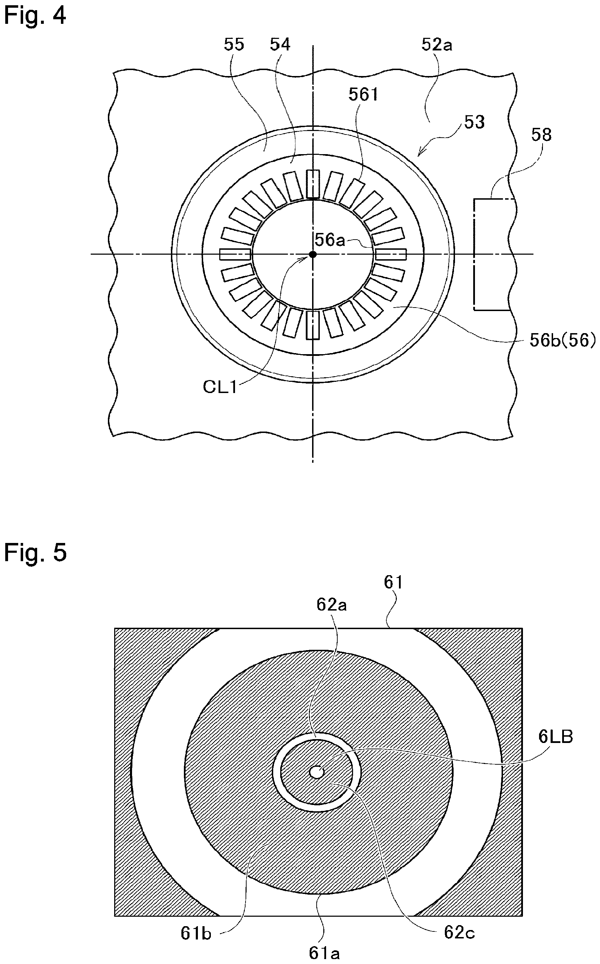

As shown in Figure 1, the control device 4 includes an operation control unit 41, an image analysis unit 42, and a storage unit 43. The operation control unit 41 gives an instruction to an unillustrated drive unit to control an operation of each member. The image analysis unit 42 analyzes an image 61 shown in Figure 5 that will be described later. The storage unit 43 stores a program of laser processing and a program of a nozzle inspection operation that will be described later.

The operation control unit 41 operates the unillustrated drive unit so as to independently control an operation to move the carriage 13 in the left-right direction, an operation to move the head carriage 141 in the front-back direction, and an operation to move the laser processing head 15 in the up-down direction. Further, the operation control unit 41 controls operations of the laser oscillator 2 and the assist gas supply device 3.

As a result, the laser processing head 15 applies laser processing to the workpiece W supported by the processing table 16, by making an emission of the laser beam LB and a blow of the assist gas AG independent of each other, while moving three-dimensionally above the workpiece W.

The nozzle inspection device 5 is provided to a right rear portion of the processing machine main body 1.

Next, the nozzle inspection device 5 will be described with reference to Figures 4 and 5. Figure 4 is a top surface view of a vicinity of a beam incident unit 53 of the nozzle inspection device 5, and Figure 5 is a diagram showing an image 61 picked up by an image pickup device 58 of the nozzle inspection device 5.

As shown in Figure 2, the nozzle inspection device 5 includes an accommodation unit 51 and an inspection main body unit 52, and assumes a rectangular parallelepiped shape having a longitudinal direction in the left-right direction.

The accommodation unit 51 includes a base 512 on a flat plate and a cover 511 having a U-shaped cross section, and is configured to be a box shape having a left end surface being open to be an entrance/exit 51a.

The inspection main body unit 52 enters and exits from the entrance/exit 51a, and reciprocally moves between an accommodation position at which the inspection main body unit 52 is accommodated inside of the accommodation unit 51 and an inspection position at which the inspection main body unit 52 is protruded to the left from the entrance/exit 51a as shown by an arrow DR1. Figure 2 shows a state in which the inspection main body unit 52 is at the inspection position.

The inspection main body unit 52 is retracted, at the accommodation position, outside of a region capable of supporting the workpiece W on the processing table 16 and is advanced, at the inspection position, into the region capable of supporting the workpiece W on the processing table 16.

The reciprocal movement of the inspection main body unit 52 is performed by an operation of an air cylinder. The operation of the air cylinder is controlled by the operation control unit 41.

The inspection main body unit 52 includes a cover 52a as a housing. The cover 52a includes the beam incident unit 53, which includes an opening part 52a1, on a left side part of a top surface thereof.

As shown in Figure 2, when an inspection of the nozzle 151 is executed by the nozzle inspection device 5, the laser processing head 15 is moved to directly above the beam incident unit 53 under the control of the operation control unit 41.

As shown in Figure 3, the inspection main body unit 52 is configured to include a screen 54, a holding ring 55, a beam source substrate 56, a mirror 57, and the image pickup device 58.

As described above, the opening part 52a1 is formed in the cover 52a of the inspection main body unit 52.

The opening part 52a1 is a stepped hole having a large diameter on an upper side thereof, to which the screen 54 is attached by the holding ring 55 in a posture in which an optical axis CL1 that is an axis is in the vertical direction.

The screen 54 is an optical element that converts a near-infrared beam into a visible beam. As the screen 54, for example, a 0.5 mm thick "YAGLASS-T" manufactured by Sumita Optical Glass, Inc. is used.

The beam source substrate 56 is arranged below the opening part 52a1. A beam guide hole 56a that is concentric with the optical axis CL1 of the screen 54 is formed in the beam source substrate 56.

As shown in Figures 3 and 4, on a top surface 56b of the beam source substrate 56, a plurality of LEDs 561 that serve as light sources are radially mounted on a peripheral edge of the beam guide hole 56a.

In Figure 3, a mirror 57 having the optical axis CL1 bent by 90° to be a horizontal axis thereof is arranged below the beam guide hole 56a, and the image pickup device 58 is arranged to the right of the mirror 57. The image pickup device 58 includes a lens 581 and an image pickup element 582 having a sensitivity to a wavelength region of the visible beam. An illumination operation of the LED 561 and an image pickup operation of the image pickup device 58 are controlled by the operation control unit 41.

The nozzle inspection device 5 illuminates the nozzle 151 of the laser processing head 15 located above the opening part 52a1 by causing the plurality of LEDs 561 to emit beams, and picks up an image in which the nozzle 151 is viewed from a direction of an optical axis CL2 based on a reflected beam from the nozzle 151 by the image pickup device 58.

As shown in Figure 5, in the image 61, as a positive display, a tip end surface 151b of the nozzle 151 shown in Figure 3 is shown as a wide ring-shaped region 61b with low luminance, and an outer peripheral edge 151a of the tip end surface 151b is shown as an external edge 61a of the ring-shaped region 61b.

Further, an inner peripheral edge 152b of the emission hole 152 of the nozzle 151 is shown as a fine annular region 62a with high luminance at an internal edge of the ring-shaped region 61b, and an inner space of the emission hole 152 is shown as a disk region 62c with low luminance.

When the laser oscillator 2 is operated to emit the laser beam LB from the emission hole 152 in a state shown in Figure 3, the laser beam LB that is a near-infrared beam is converted into a visible beam by the screen 54 and an image thereof is picked up by the image pickup element 582.

The image of the laser beam LB is picked up as a laser beam image 6LB, which is a high luminance dot in the image 61 shown in Figure 5.

As shown in Figures 2 and 5, the image analysis unit 42 of the control device 4 analyzes, by a publicly known method, the image 61 containing the laser beam image 6LB that is output from the image pickup device 58, and obtain a shape, an average inner diameter, a center position, and the like of the emission hole 152 of the nozzle 151. An amount of position displacement, a direction of the position displacement, and the like of the laser beam LB with respect to the obtained center position of the nozzle 151 are also obtained.

As shown in Figures 2 and 3, under the control of the operation control unit 41, the laser processing head 15 causes the nozzle 151 of the laser processing head 15 to be located above the screen 54 and causes the assist gas supply device 3 to operate so as to blow the assist gas AG downward from the emission hole 152. As a result, the blown assist gas AG hits a top surface 54a of the screen 54, and becomes an air flow radially travelling outward in a radial direction along the top surface 54a from the hit position.

Due to this air flow, dust and dirt that adhere to the top surface 54a of the screen 54 are removed from the top surface 54a and carried out of the screen 54.

Therefore, there is less possibility that the dust and the dirt on the top surface 54a of the screen 54 are reflected in the image 61 and affect a result of the image analysis by the image analysis unit 42. This makes it unnecessary for an operator to frequently clean the top surface 54a of the screen 54.

As a result, the laser processing device 91 is highly maintainable.

The control device 4 executes the nozzle inspection operation, which is an inspection operation of the nozzle 151, in a predetermined timing. The predetermined timing is, for example, after a predetermined number of sheets of workpieces W is processed, after a predetermined laser processing time has elapsed, after the nozzle is changed, or when a command to execute the inspection operation is input by the operator or the like.

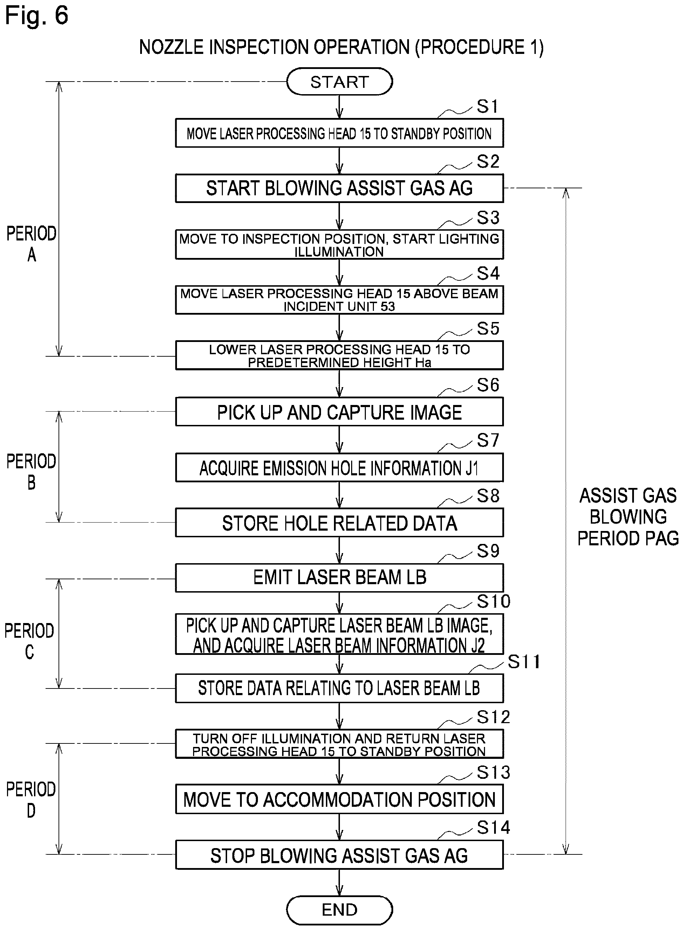

Figure 6 is a flow chart illustrating procedure 1 of the nozzle inspection operation as a nozzle inspection method.

In the procedure 1, the operation control unit 41 and the image analysis unit 42 of the control device 4 execute the nozzle inspection operation that includes a blow operation of the assist gas AG.

As shown in Figure 6, the procedure 1 is divided into four periods from a period A to a period D in the order of execution.

The period A is a period before the image is captured, in which movement of members of the laser processing head 15 and the nozzle inspection device 5 are mainly performed.

The period B is a period in which the image of the emission hole 152 is captured and analyzed in a state in which the laser beam LB is not emitted.

The period C is a period in which the laser beam LB is emitted and the image containing the laser beam image 6LB is captured and analyzed.

The period D is a period after the image is captured and analyzed, in which the movement of members of the laser processing head 15 and the nozzle inspection device 5 are performed.

In the procedure 1, a blowing period PAG of the assist gas AG is continuously set across from the middle of the period A to the period D.

The period A is a period from step S1 to step S5.

At a start of the execution of the nozzle inspection operation, the inspection main body unit 52 of the nozzle inspection device 5 is at the accommodation position, the laser beam LB is not emitted, and the assist gas AG is not blown.

The operation control unit 41 causes the laser processing head 15 to move to a predetermined standby position in an ordinary processing operation (S1). The standby position is a position away from the nozzle inspection device 5.

The operation control unit 41 causes the assist gas supply device 3 to operate. As a result, the assist gas AG is blown downward from the emission hole 152 of the nozzle 151 of the laser processing head 15 (S2).

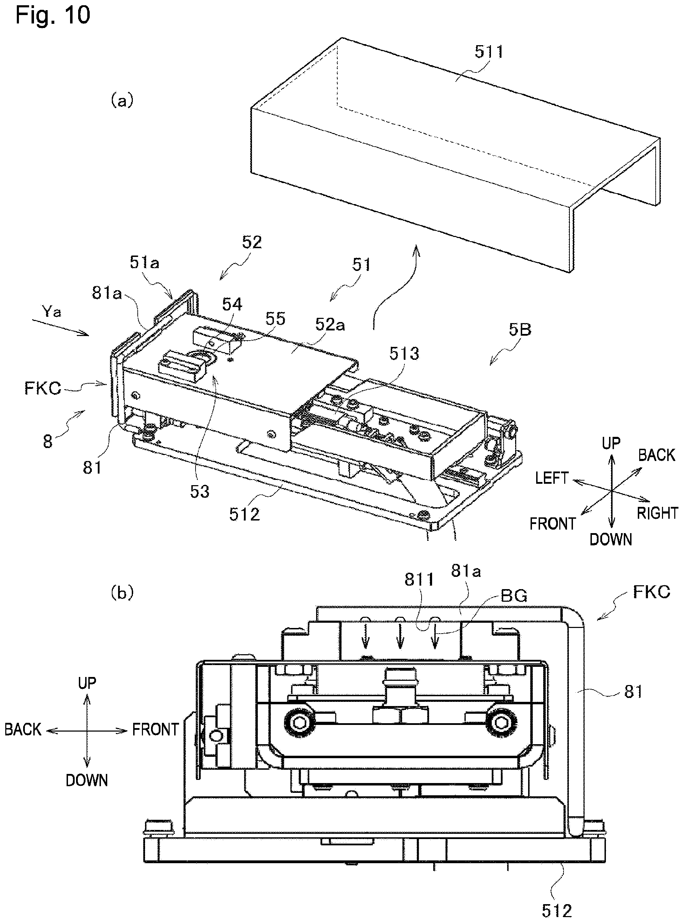

The operation control unit 41 causes an air cylinder 513 (see Figure 10) of the nozzle inspection device 5 to operate so as to move the inspection main body unit 52 to the inspection position, and turns on the plurality of LEDs 561 to illuminate the nozzle 151 from below (S3).

The operation control unit 41 moves the laser processing head 15 above the beam incident unit 53 of the nozzle inspection device 5 (S4). Specifically, as shown in Figure 3, above the beam incident unit 53, the optical axis CL2 of the laser processing head 15 is aligned with the optical axis CL1 of the screen 54.

The operation control unit 41 lowers the laser processing head 15 to a predetermined height set in advance as shown by an arrow DR2 in Figure 3 (S5).

The predetermined height is a height Ha shown in Figure 3, and is set in such a manner as to improve a focusing range of the lens 581 of the image pickup device 58 and the dust removal on the top surface 54a of the screen 54 by way of the assist gas AG.

The period B is a period from step S6 to step S8.

The operation control unit 41 causes the image pickup device 58 to execute a focusing operation and image pickup (S6).

The image analysis unit 42 captures the image 61 picked up by the image pickup device 58. Since the laser beam LB is not emitted, the laser beam image 6LB shown in Figure 5 is not contained in the image 61 at this time.

The image analysis unit 42 causes the image 61 without the laser beam image 6LB to be stored in the storage unit 43. Further, the image analysis unit 42 analyzes the image 61 and acquires emission hole information J1 (S7).

The emission hole information J1 is information that contains the shape, the average inner diameter, and the center position of the emission hole 152 of the nozzle 151.

The image analysis unit 42 causes the acquired emission hole information J1 to be stored in the storage unit 43 (S8). In the storage unit 43, the acquired emission hole information J1 may be overwritten and stored on the emission hole information J1 acquired in previous step S7, or may be stored in association with the number of executions of step S7 so that a history thereof is left.

The period C is a period from step S9 to step S11.

When the image analysis unit 42 acquires the emission hole information J1 and causes the emission hole information J1 to be stored in the storage unit 43, the operation control unit 41 causes the laser oscillator 2 to operate so as to emit the laser beam LB downward from the emission hole 152 (S9).

As shown in Figure 3, the laser beam LB is converted into the visible beam when passing through the screen 54 and is horizontally deflected by the mirror 57, so that the image thereof is picked up by the image pickup device 58.

As a result, the image 61 with the laser beam image 6LB, which is shown in Figure 5, is obtained.

The images are picked up both with and without the emission of the laser beam LB in order to satisfactorily match the level of luminance between the laser beam image 6LB and the fine annular region 62a, which is the image of the inner peripheral edge 152b of the emission hole 152, or the like, and to acquire high-quality images while preventing a flare and the like from being reflected.

The image analysis unit 42 causes the image 61 with the laser beam image 6LB to be stored in the storage unit 43. Further, the image analysis unit 42 analyzes the image 61, and acquires laser beam information J2 by referring to the emission hole information J1 stored in the storage unit 43 (S10).

The laser beam information J2 contains a position of the laser beam LB in the emission hole 152, a deviation amount and a deviation direction between the position of the laser beam LB and the center position of the emission hole 152.

The image analysis unit 42 causes the acquired laser beam information J2 to be stored in the storage unit 43 (S11) .

In the storage unit 43, the acquired laser beam information J2 may be overwritten and stored on the laser beam information J2 acquired in step S10 of a previous nozzle inspection operation, or may be stored in associated with the number of executions of step S10 so that a history thereof is left.

The period D is a period from step S12 to step S14.

When the laser beam information J2 is stored in the storage unit 43 by the image analysis unit 42, the operation control unit 41 turns off the plurality of LEDs 561 to stop the illumination, and causes the laser processing head 15 to move to the standby position (S12).

The operation control unit 41 causes the air cylinder 513 (see Figure 10) to operate so as to move the inspection main body unit 52 to the accommodation position (S13), and stops the gas supply from the assist gas supply device 3 so as to stop the assist gas AG from being blown from the emission hole 152 (S14).

When step S14 is executed, the nozzle inspection operation ends.

In the procedure 1, the assist gas AG is started to be blown when the inspection main body unit 52 is at the accommodation position, which is before the operation of moving the inspection main body unit 52 to the inspection position.

As a result, spatter and the like that adhere to the tip end surface 151b around the nozzle 151, the emission hole 152, and the like can be removed by a flow of the blown gas. This blow may be performed in a pulsed manner. For example, the assist gas AG may be continuously blown after the assist gas AG is blown for one second once or twice or more.

According to the above-mentioned procedure 1, the operation control unit 41 continuously blows the assist gas AG from the beginning to the end of the nozzle inspection operation. Therefore, it is possible to prevent the dust and the like from adhering to the top surface 54a of the screen 54 when the inspection main body unit 52 comes out of the accommodation unit 51 and is at the inspection position at which the inspection main body unit 52 is exposed to the outside.

As a result, it is possible to more reliably prevent the dust and the like from being reflected in the image 61, and to stably obtain an image analysis result with high accuracy.

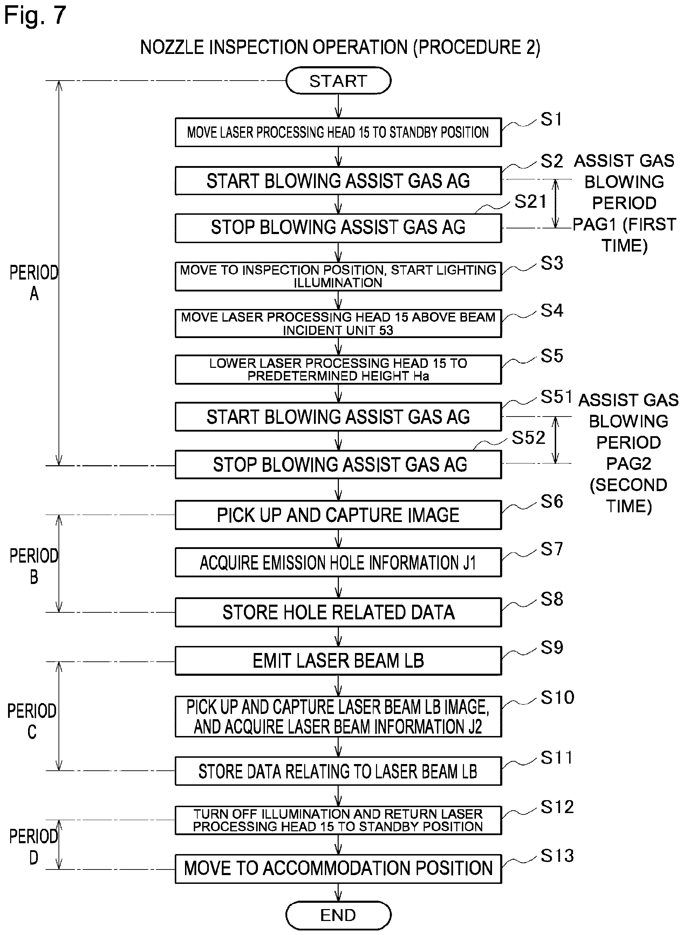

Figure 7 is a flow chart illustrating procedure 2 of the nozzle inspection operation. The operation control unit 41 may execute the nozzle inspection operation according to the procedure 2 shown in Figure 7 in lieu of the procedure 1. In the procedure 2, the blowing period of the assist gas AG is different from that in the procedure 1. In the procedure 2, the blowing period of the assist gas AG is shorter and a consumption amount thereof is smaller than those in the procedure 1.

Specifically, although the order and the operations of steps S1 to S14 in the procedure 1 are the same in the procedure 2, the procedure 2 is different in that the blowing period of the assist gas AG is set twice, that is, at the beginning and at the end of the period A.

As shown in Figure 7, while a blow start timing (step S2) in the first blowing period of the assist gas AG is the same as that in the procedure 1, a blow stop timing (step 21) is set before the execution of the operation of moving the inspection main body unit 52 from the accommodation position to the inspection position (step S3), which is different from the procedure 1.

By the first blow operation of the assist gas AG, in the same manner as the procedure 1, it is possible to remove the spatter and the like that adhere to the tip end surface 151b at a periphery of the nozzle 151, the emission hole 152, and the like.

Further, by setting the first blow stop timing (step 21) to be a timing at which the inspection main body unit 52 is at the accommodation position, which is before starting to move toward the inspection position, it is possible to prevent the spatter and the like, which are removed from the periphery of the nozzle 151, from flying in the air and adhering to the screen 54.

On the other hand, as shown in Figure 7, steps S51 and S52 relating to the second blow operation of the assist gas AG are executed after step S5 at which the laser processing head 15 is lowered to the predetermined height and immediately before the image pickup of the image 61 is made possible.

As a result, the time from removing the dust and the like on the top surface 54a of the screen 54 with the assist gas AG to picking up the image 61 is short, and there is a smaller possibility that the dust and the like adhere to the top surface 54a of the screen 54 immediately before the image pickup.

The operations of the period B to the period D in the procedure 2 are the same as those of the procedure 1.

At least one of the first and second blows of the assist gas AG in the procedure 2 may be repeated a plurality of times not as a continuous blow but as a short blow in a pulsed manner.

As described above in detail, in the laser processing device 91, the control device 4 performs control such that the assist gas AG used for laser processing is blown onto the top surface 54a of the screen 54 of the nozzle inspection device 5 and performs cleaning to remove the dust and the like on the top surface 54a. Therefore, the cleaning of the screen 54 performed by the operator is obviated, or the execution frequency of the cleaning is reduced.

As a result, the laser processing device 91 is highly maintainable.

Further, in the laser processing device 91, the control device 4 executes the above-mentioned cleaning at least before the image 61 is picked up by the nozzle inspection device 5.

As a result, the possibility that the dust or the like are reflected in the image 61 is further reduced, the image analysis accuracy of the nozzle inspection device 5 is enhanced, and the maintainability is further improved.

Various tests were performed on the nozzle inspection operation executed by the laser processing device 91, and effects of following 1 to 3 were confirmed as to a pressure, a blowing time, and the like of the blown assist gas.

The screen 54 is the 0.5 mm thick "YAGLASS-T" manufactured by Sumita Optical Glass, Inc. as described above, and the assist gas AG is a nitrogen gas.
1. As to the impact of the gas pressure
   Even when the gas pressure is 0.3 MPa, which is relatively high in the practical pressure range, a problem such as a crack does not occur in the screen 54.
2. As to the effect in accordance with the blowing time
   As to the blowing time, when the gas pressure is 0.05 MPa, which is within the practical pressure, the dust can be sufficiently removed by blowing the gas for one second, and an effective cleaning effect is exhibited.
3. When the gas pressure is 0.05 MPa and the blowing time is 2 seconds that is within the practical range, even if the blow is executed about 10,000 times, no adhesion of dirt due to the assist gas AG is observed on the screen 54.

In this manner, in the laser processing device 91, by blowing the assist gas AG, which is used for the laser processing, onto the top surface 54a of the screen 54 within a range of ordinary use conditions that are not special conditions, it is possible to effectively remove the dust on the surface of the screen 54.

The embodiment of the present invention is not limited to the above-described configuration, and a modification may be used as long as it does not deviate from the gist of the present invention.

An assist gas blowing unit FK is not limited to the configuration in which the assist gas AG is blown from the emission hole 152 of the nozzle 151 as described above.

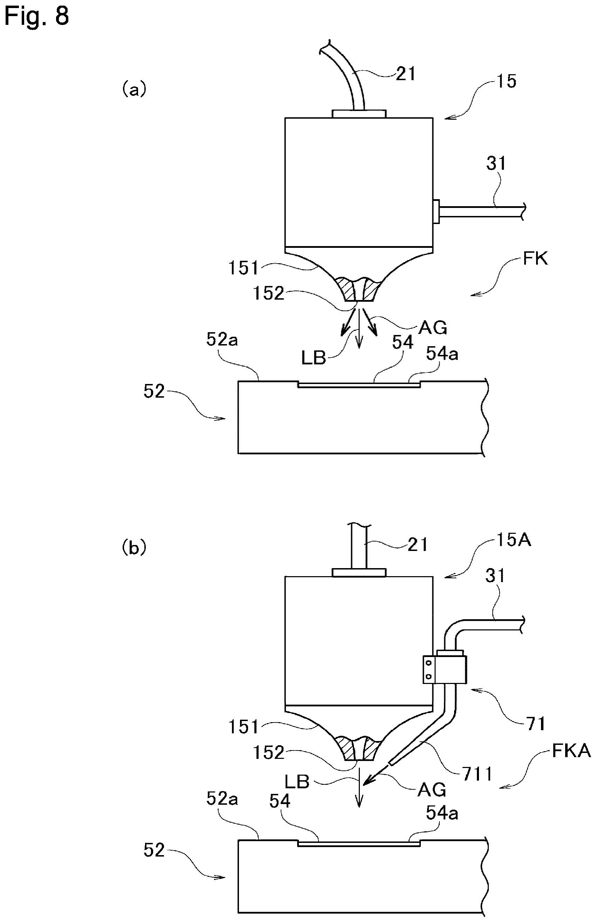

Figures 8 to 12 are diagrams showing various aspects of the assist gas blowing unit FK.

Figure 8(a) is a schematic view showing the assist gas blowing unit FK that blows the assist gas AG from the emission hole 152 of the laser processing head 15 described above.

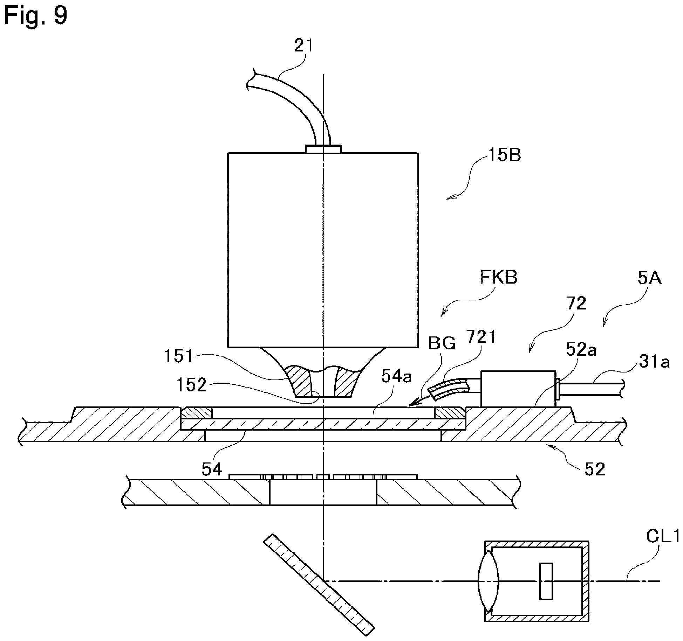

Figure 8(b) is a schematic view showing an assist gas blowing unit FKA that is a first modification of the assist gas blowing unit FK, and Figure 9 is a schematic view showing, as a second modification, a blow gas blowing unit FKB that blows a blow gas BG in addition to the assist gas blowing unit FK or in lieu of the assist gas blowing unit FK.

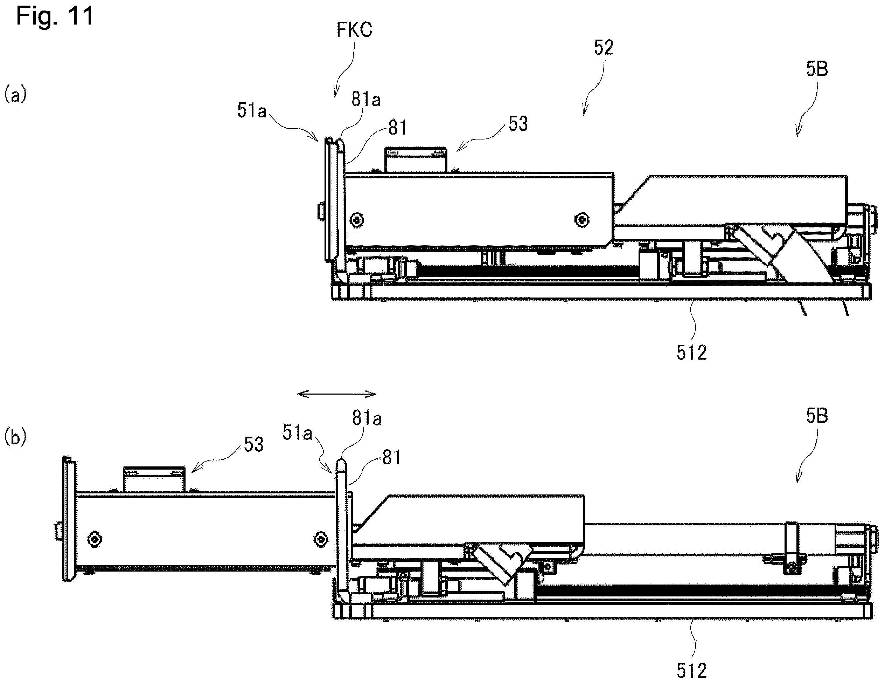

Further, Figures 10 and 11 are diagrams showing, as a third modification, a nozzle inspection device 5B including a blow gas blowing unit FKC that blows the blow gas BG in addition to the assist gas blowing unit FK or in lieu of the assist gas blowing unit FK. Figure 10(a) is a perspective view showing a state in which the cover 511 of the nozzle inspection device 5B is removed. Figure 10(b) is a view seen from an arrow Ya in Figure 10(a) .

The assist gas blowing unit FKA shown in Figure 8(b) does not have a structure in which the assist gas AG is blown from the emission hole 152, but has a structure in which the assist gas AG is blown from a gas nozzle 711 arranged outside of the nozzle 151.

Specifically, the assist gas blowing unit FKA includes a laser processing head 15A and a gas blowing unit 71 attached to an outside thereof.

The gas blowing unit 71 includes the gas nozzle 711 to which the gas hose 31 is connected, and the gas supplied from the gas hose 31 is blown below the emission hole 152 as the assist gas AG from a tip end of the gas nozzle 711 as in the case of the laser processing. When the laser processing head 15A is at a predetermined position of the time of the nozzle inspection, the assist gas AG blown from the gas nozzle 711 hits the top surface 54a of the screen 54 and blows off and removes the dust and the like that adhere to the top surface 54a.

The timing for blowing the assist gas AG from the gas blowing unit 71 is the assist gas blowing period of the procedure 1 or the second blowing period of the procedure 2.

As shown in Figure 9, the blow gas blowing unit FKB is provided to a nozzle inspection device 5A as a modification of the nozzle inspection device 5.

The blow gas blowing unit FKB includes a gas blowing unit 72 attached to the cover 52a of the inspection main body unit 52. A branch hose 31a branched from the gas hose 31 of the assist gas supply device 3 is connected to the gas blowing unit 72, and the gas is supplied from the assist gas supply device 3. In lieu of the gas from the assist gas supply device 3, purge air that can be used in an ordinary work place may be used through a filter that removes a powder dust and oil mist.

In the blow gas blowing unit FKB shown in Figure 9, the gas blowing unit 72 includes a gas nozzle 721 that blows the gas supplied from the branch hose 31a toward the top surface 54a of the screen 54.

With this configuration, even if the laser processing head 15 of the laser processing device 91 is a laser processing head 15B shown in Figure 9, which does not have the function of blowing the assist gas AG, it is possible to remove the dust and the like on the top surface 54a of the screen 54 by blowing the air.

The timing for blowing the blow gas BG from the gas blowing unit 72 is the second blowing period or a period including the blowing period in the procedure 2.

As shown in Figures 10(a) and 10(b) and Figures 11(a) and 11(b), the blow gas blowing unit FKC is provided to the nozzle inspection device 5B as a modification of the nozzle inspection device 5.

The blow gas blowing unit FKC includes a gas blowing unit 8 attached to a part of a peripheral edge of the entrance/exit 51a of the accommodation unit 51. Specifically, the gas blowing unit 8 includes a guide pipe 81 arranged in an L shape from a front edge to an upper edge of the entrance/exit 51a. The upper edge portion of the entrance/exit 51a in the guide pipe 81 is a nozzle portion 81a.

A plurality of blow ports 811 that blow the gas downward are formed in the nozzle portion 81a so as to be separated in the front-back direction.

In the blow gas blowing unit FKC, the gas is supplied to the guide pipe 81 from the assist gas supply device 3. In lieu of the gas from the assist gas supply device 3, a purge gas that can be used in the ordinary work place may be used through the filter that removes the dust and the oil mist.

The operation control unit 41 blows the blow gas BG downward from the blow port 811 during the operation in which the inspection main body unit 52 moves from the accommodation position to the inspection position through the entrance/exit 51a.

As a result, the blow gas BG blown from the blow port 811 hits the top surface 54a of the screen 54 in the inspection main body unit 52 that is moving from the accommodation position to the inspection position, and blows off and removes the dust and the like that adhere to the top surface 54a.

The nozzle inspection device 5B shown in Figures 10 and 11 may be further modified to be a nozzle inspection device 5D.

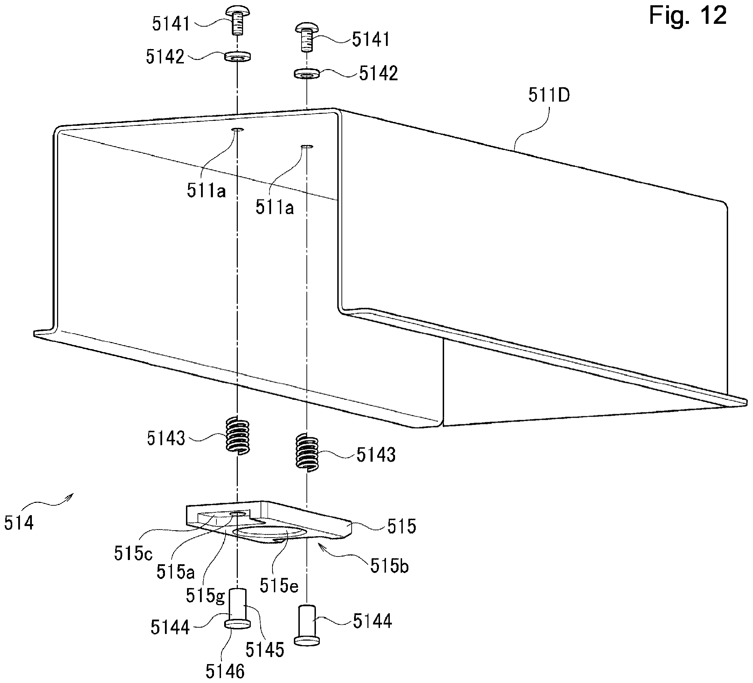

The nozzle inspection device 5D will be described with reference to Figures 12 to 20.

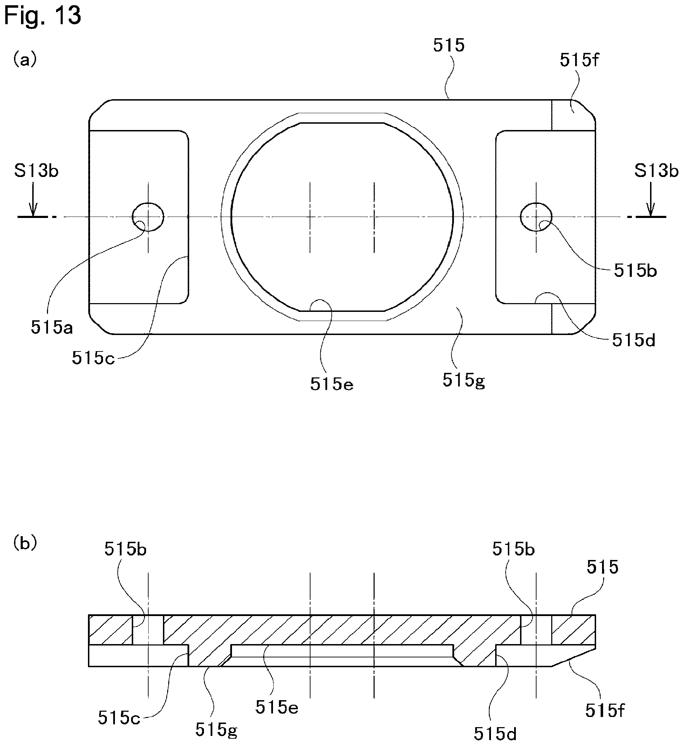

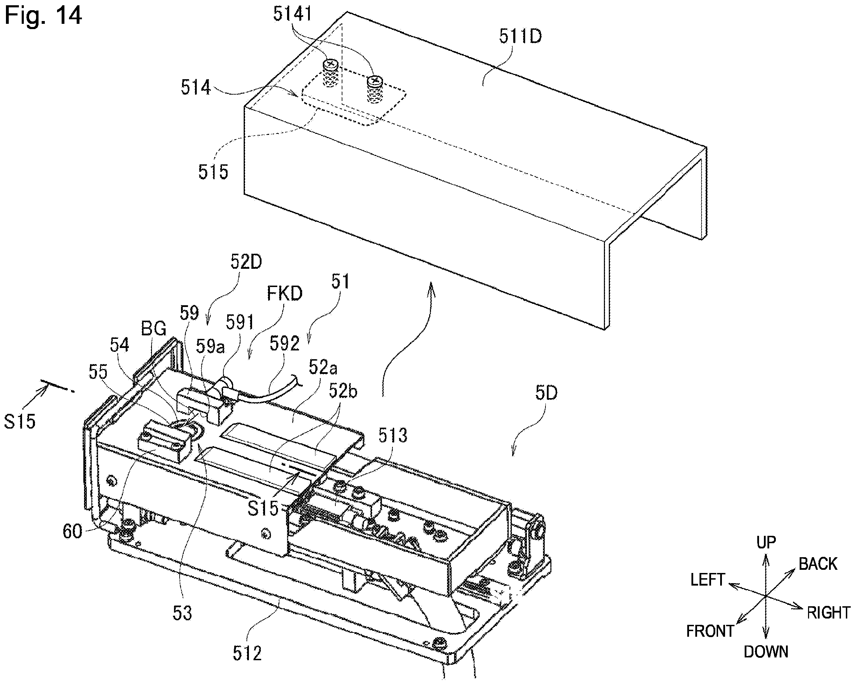

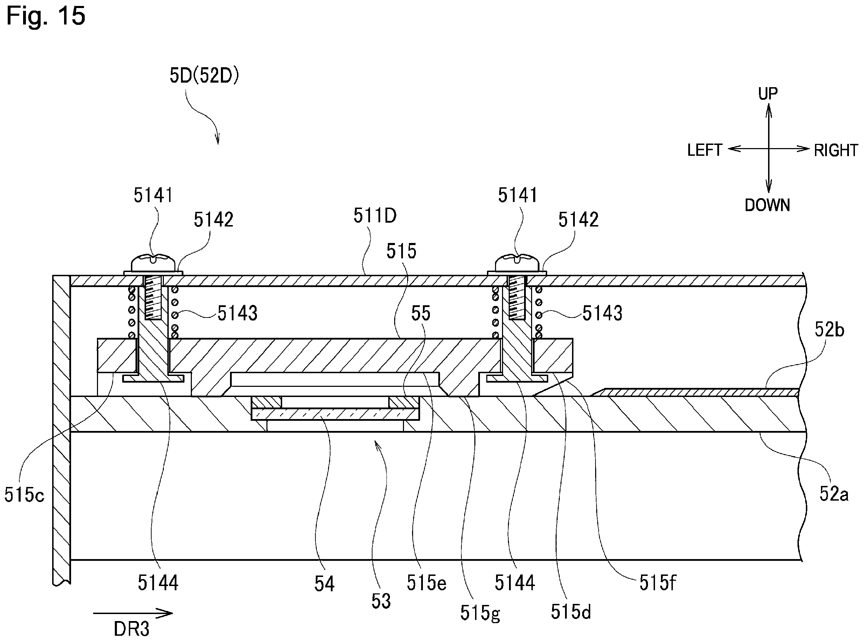

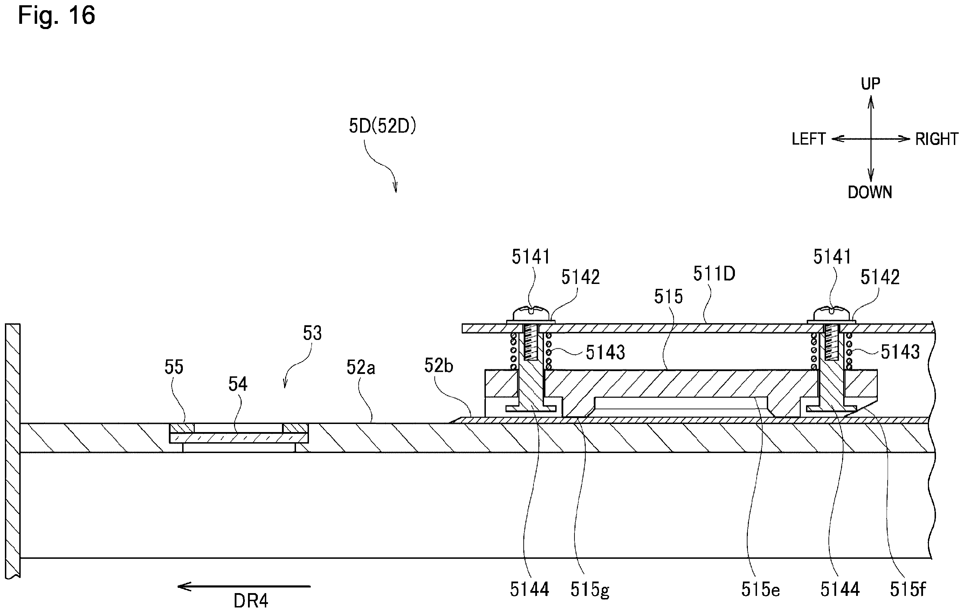

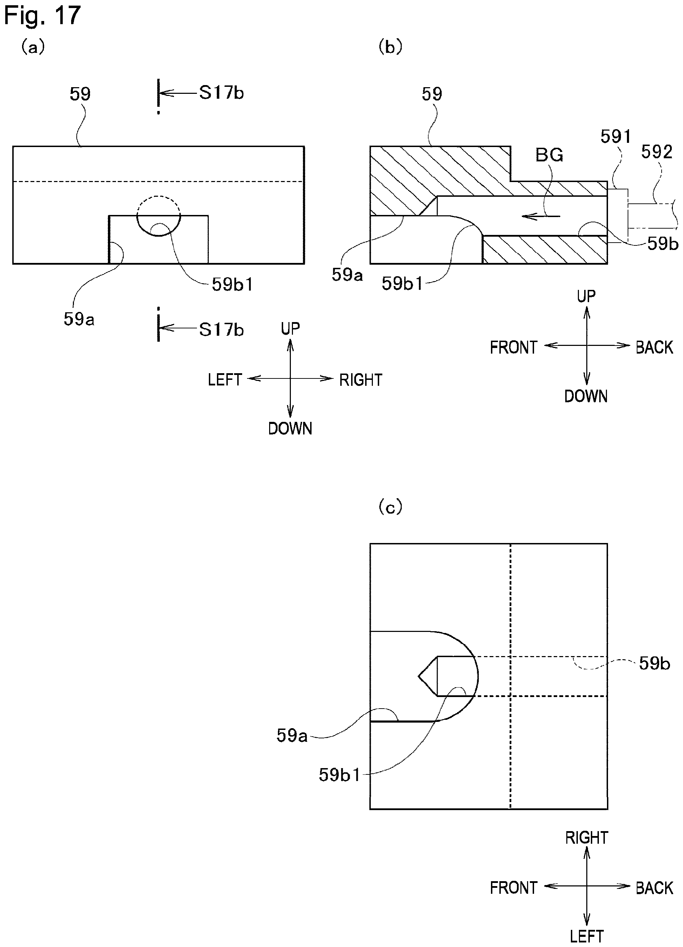

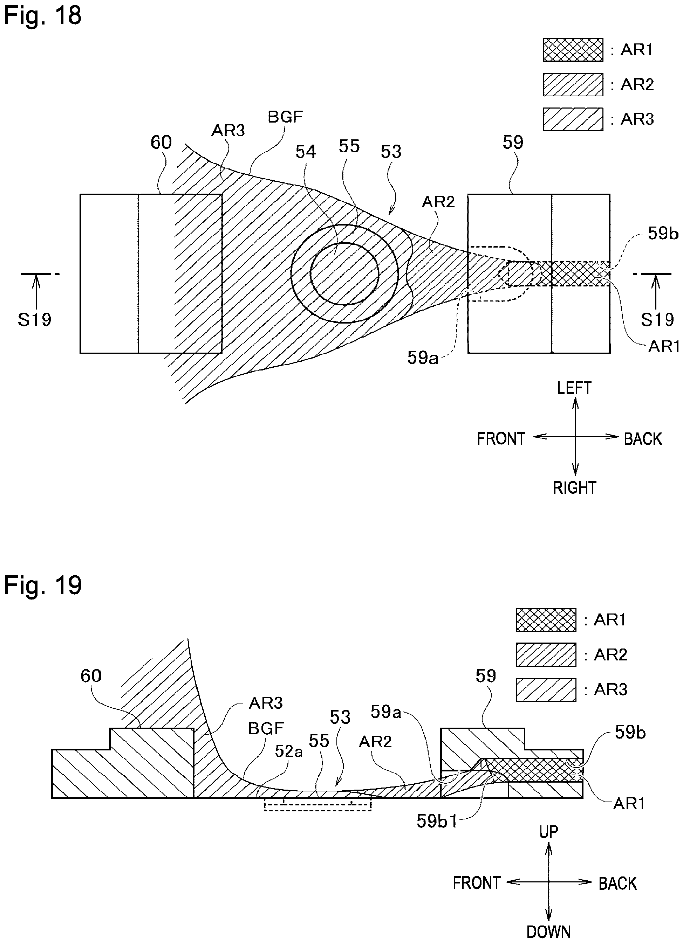

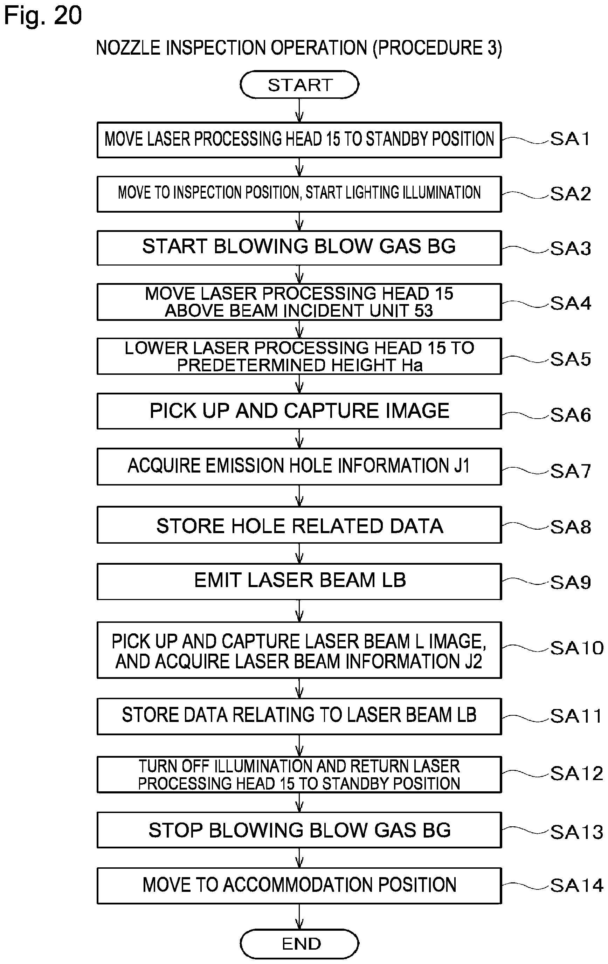

Figure 12 is an assembly drawing for describing a configuration of a cover 511D included in the nozzle inspection device 5D. Figure 13 is a diagram showing a cover plate 515 included in the cover 511D in which Figure 13(a) is a bottom surface view, and Figure 13(b) is a sectional view taken along positions S13b-S13b in Figure 13(a). Figure 14 is a perspective view of the nozzle inspection device 5D in a state in which the cover 511D thereof is removed. Figure 15 is a sectional view taken along positions S15-S15 in Figure 14. Figure 16 is a diagram showing a state in which the inspection main body unit 52D is at the inspection position at which the inspection main body unit 52D is protruded to the left in contrast to Figure 15. Figure 17 is a three-surface diagram showing a blow block 59 included in the nozzle inspection device 5D in which Figure 17(a) is a front surface view, Figure 17(b) is a sectional view taken along positions S17b-S17b in Figure 17(a), and Figure 17(c) is a bottom surface view. Figure 18 is a schematic plan view showing a result of simulation of a gas flow blown from the blow block 59. Figure 19 is a schematic sectional view taken along positions S19-S19 in Figure 18. Figure 20 is a flow chart illustrating procedure 3 of the nozzle inspection operation that is a modification of the nozzle inspection method of the second embodiment.

The nozzle inspection device 5D is different from the nozzle inspection device 5B in that the cover 511 is the cover 511D including an inner cover unit 514 (see Figure 14) on a front portion of a top plate, a blow gas blowing unit FKD is included that blows the blow gas BG to be blown toward the beam incident unit 53 from a blow recessed portion 59a of the blow block 59, and the like. Other configurations in the nozzle inspection device 5D are substantially the same as those in the nozzle inspection device 5B.

First, the cover 511D will be described with reference to Figure 12.

The cover 511D has a pair of through holes 511a at positions biased toward one end side in the longitudinal direction on the top plate. The pair of through holes 511a are formed at a center position in the width direction so as to be separated from each other in the longitudinal direction.

The inner cover unit 514 is configured to include a pair of screws 5141, a pair of washers 5142, a pair of compression coil springs 5143, a pair of shafts 5144, and a cover plate 515.

As shown in Figure 13, the cover plate 515 is a flat plate-shaped member having a substantially rectangular shape in a plan view.

The cover plate 515 includes a first recessed portion 515c and a second recessed portion 515d in which approximately half of each thickness is hollowed out at both end portions in the longitudinal direction on a bottom surface 515g.

The first recessed portion 515c and the second recessed portion 515d include a first through hole 515a and a second through hole 515b at center positions in the width direction of the cover plate 515, respectively.

At a center portion in the longitudinal direction on the bottom surface 515g of the cover plate 515, a third recessed portion 515e is formed in which approximately half in a thickness direction is hollowed out.

A plan view shape of the third recessed portion 515e is an elliptical shape in which both end portions in the longitudinal direction have circular-arc shapes and a center portion is parallel and linear.

A right end portion of the bottom surface 515g of the cover plate 515 is a guide part 515f that is inclined upward toward a right end thereof.

As shown in Figure 12, one screw 5141 inserted through the washer 5142 into the through hole 511a of the top plate is inserted into the compression coil spring 5143 and the first through hole 515a of the cover plate 515, and screwed to the shaft 5144.

The shaft 5144 includes a shaft portion 5145 that can be inserted into the first through hole 515a and the compression coil spring 5143 and cannot pass through the through hole 511a, and a head portion 5146 that cannot pass through the first through hole 515a.

The other screw 5141 is inserted into the second through hole 515b in the same manner, and screwed to the shaft 5144 in the same configuration.

As a result, the cover plate 515 is at a lower end position, at which, in a natural state, the cover plate 515 is constantly urged downward by the compression coil spring 5143 and is abutted against the head portion 5146 of the shaft 5144. The cover plate 515 is able to move upward when a force to move upward is applied against the urging force of the compression coil spring 5143.

As shown in Figure 14, the inspection main body unit 52D includes an opposing block 60 and the blow block 59 attached at positions sandwiching the beam incident unit 53 from the front-back direction on the top surface of the cover 52a. Further, on the top surface of the cover 52a, a pair of sliding plates 52b and 52b are attached on the right side of the beam incident unit 53.

The pair of sliding plates 52b and 52b are elongated plate-shaped members, and are arranged in a posture extending in the left-right direction so as to be separated from each other in parallel in the front-back direction. The sliding plate 52b is made of a material having excellent slidability (polyacetal resin or the like), and an inclined surface that becomes thinner toward a tip end thereof is formed at an end portion that is a side of the beam incident unit 53.

As shown in Figure 15, in the nozzle inspection device 5D, when the inspection main body unit 52D is at the accommodation position to which the inspection main body unit 52D has moved as shown by an arrow DR3, the cover plate 515 hits the top surface of the cover 52a and is slightly lifted above the lower end position. Therefore, the cover plate 515 is urged downward by the compression coil spring 5143 and pressed against the top surface of the cover 52a.

In this state, the third recessed portion 515e of the cover plate 515 is formed in a range including the beam incident unit 53 in a top surface view. Therefore, the beam incident unit 53 is surrounded by the bottom surface 515g at a periphery of the third recessed portion 515e and is in a state of being substantially sealed.

As a result, when the inspection main body unit 52D is at the accommodation position, the dust and the spatter do not adhere to the screen 54 of the beam incident unit 53.

As shown in Figure 16, when the air cylinder 513 (see Figure 14) is operated to move the inspection main body unit 52D from the accommodation position to the left as shown by an arrow DR4, the cover plate 515 runs on the sliding plate 52b from the top surface of the cover 52a, and relatively slides on the sliding plate 52b. Since the sliding plate 52b is made of the material having excellent slidability as described above, the sliding of the inspection main body unit 52D is executed smoothly and the dust due to the sliding is not substantially generated.

As shown in steps SA2 and SA3 of Figure 20, when the operation control unit 41 causes the inspection main body unit 52D to move from the accommodation position to the inspection position, the blow gas BG is blown from the blow block 59 (SA3). The blow block 59 functions as the blow gas blowing unit FKD.

The operation control unit 41 stops the blow in step SA13. Therefore, after starting the blow of the blow gas BG in step SA3, the operation control unit 41 continues to execute the blow until the inspection main body unit 52D is returned to the accommodation position again.

In other words, as shown in Figures 15 and 16, in the nozzle inspection device 5D, when the inspection main body unit 52D is at the accommodation position, the beam incident unit 53 is maintained in a substantially sealed state by the cover plate 515, and when the inspection main body unit 52D is moved from the accommodation position, the beam incident unit 53 is constantly exposed to the blow gas BG.

As a result, the nozzle inspection device 5D has an extremely low possibility of the dust and the dirt adhering to the screen 54 of the beam incident unit 53, and is more highly maintainable.

As shown in Figures 14 and 17(b), a nozzle part 591 connected to a tip end of a hose 592 is attached to the blow block 59. The other end of the hose 592 is branch-connected to the gas hose 31 of the assist gas supply device 3. Therefore, the gas is supplied to the blow block 59 from the assist gas supply device 3 through the hose 592, and the supplied gas is blown, as the blow gas BG, from the blow recessed portion 59a to an outside as will be described later. In lieu of the gas from the assist gas supply device 3, the purge air that can be used in the ordinary work place may be supplied to the blow block 59 through the filter for removing the powder dust and the oil mist, and a supply on-off valve.

The blow operation of the blow gas BG from the blow block 59 is performed by the operation control unit 41 that controls the operation of the assist gas supply device 3 or the supply on-off valve of the purge air.

As shown in Figures 17(a) to 17(c), the blow block 59 is formed in a substantially L-shape with a vertical cross section in which an upper rear portion is missing over an entire width on the right and the left.

At a lower part of a front surface thereof, the blow recessed portion 59a, which is a recessed portion hollowed out toward a rear in a center portion in the left-right direction, is formed.

As shown in a bottom surface view of Figure 17(c), the blow recessed portion 59a is hollowed out from a front surface to the back, and a rear end thereof is formed in a circular-arc shape.

The blow block 59 includes a blow passage 59b that is a drilled hole formed from a rear surface to the front in a non-penetrated manner. In a front end portion that is an innermost portion of the blow passage 59b, a portion below the center in the up-down direction is connected to the blow recessed portion 59a and is opened with a blow edge portion 59b1 as an opening edge.

The nozzle part 591 at the tip end of the hose 592 is attached to a rear end portion of the blow passage 59b. The gas flows into the blow passage 59b from the nozzle part 591, and the inflowing gas passes through the blow edge portion 59b1 and is blown into the blow recessed portion 59a as the blow gas BG.

In this manner, the blow block 59 includes the blow recessed portion 59a, and has a blow structure in which the lower half of the innermost portion of the blow passage 59b is opened into the blow recessed portion 59a. The blow gas BG blown from the blow block 59 to the outside generates a blow gas flow BGF shown in Figures 18 and 19.

Figures 18 and 19 are diagrams in which the blow gas flow BGF is visualized by the simulation. In Figures 18 and 19, for convenience, the flow velocity of the blow gas flow BGF is classified and shown in three stages of a velocity region AR1, a velocity region AR2, and a velocity region AR3, respectively of a high velocity, a middle velocity and a low velocity.

As shown in Figures 18 and 19, after being blown from the blow recessed portion 59a to the outside, the blow gas flow BGF flows toward the front so as to cover the entire beam incident unit 53 while spreading in the left-right direction along the top surface of the cover 52a. Then, the blow gas flow BGF hits the opposing block 60 and diffuses. Although the velocity of the blow gas flow BGF that passes through the beam incident unit 53 is the low velocity (the velocity region AR3) from among the three stages, at least a part that flows in such a manner as to cover the beam incident unit 53 flows to the front, which is one direction, in the same flow velocity distribution that is not disturbed.

Therefore, in the nozzle inspection device 5D, the blow gas flow BGF constantly flows on the top surface of the screen 54 of the beam incident unit 53 while the inspection main body unit 52D is moving between the accommodation position and the inspection position and when the inspection main body unit 52D is at the inspection position.

As a result, in the nozzle inspection device 5D, there is an extremely low possibility that the dust and the dirt adhere to the screen 54 of the beam incident unit 53, and the maintainability is further improved.

Figure 20 is a flow chart illustrating the procedure 3 of the nozzle inspection operation by the nozzle inspection device 5D. For the nozzle inspection device 5D, the operation control unit 41 executes the nozzle inspection operation according to the procedure 3.

The operation control unit 41 causes the laser processing head 15 to move to the predetermined standby position in the ordinary processing operation (SA1). The standby position is a position away from the nozzle inspection device 5D.

The operation control unit 41 causes the air cylinder 513 of the nozzle inspection device 5D to operate so as to move the inspection main body unit 52D to the inspection position, and turns on the plurality of LEDs 561 (see Figure 4) to illuminate the nozzle 151 from below (SA2).

The operation control unit 41 supplies the gas to the blow block 59 substantially at the same time as the start of the movement to the inspection main body unit 52D, by operating the assist gas supply device 3 or switching the supply on-off valve of the purge air to an open state. As a result, the supplied gas is blown from the blow block 59 as the blow gas BG (SA3).

Steps SA4 to SA12 are the same as steps S4 to S12 in the procedure 1.

When the operation control unit 41 returns the laser processing head 15 to the standby position in step SA12, the blow of the blow gas BG from the blow block 59 is stopped and the inspection main body unit 52D is moved to the accommodation position (SA14). The blow stop of the blow gas BG and the arrival of the inspection main body unit 52D at the accommodation position are made substantially at the same time.

According to the procedure 3 of the nozzle inspection method described above, since the blow gas BG constantly hits the screen 54 and flows in a state in which the inspection main body unit 52D is not substantially at the accommodation position, the dust, the dirt, and the like do not adhere to the screen 54.

As a result, the nozzle inspection method of procedure 3 can further improve the maintainability of the beam incident unit 53.

The blow gas blowing unit FKB, the blow gas blowing unit FKC, and the blow gas blowing unit FKD described above in detail may be arranged side by side with the assist gas blowing unit FK and the assist gas blowing unit FKA.

The blow gas blowing unit FKB and the blow gas blowing unit FKC remove and clean the dust and the dirt that adhere to the top surface 54a of the screen 54 by the blow gas BG blown from the gas nozzle 721 and the nozzle portion 81a, respectively. Further, the blow gas blowing unit FKD removes and cleans the dust and the dirt that adhere to the top surface 54a of the screen 54 by the blow gas BG blown from the blow recessed portion 59a.

As a result, the laser processing device 91 including the blow gas blowing unit FKB, the blow gas blowing unit FKC, or the blow gas blowing unit FKD is highly maintainable.

A protective glass may be arranged above the screen 54 as an optical element that directly faces the nozzle 151 and protects the screen 54. In this case, the assist gas blowing units FK and FKA and the blow gas blowing units FKB, FKC, and FKD blow the assist gas AG and the blow gas BG to a top surface of the protective glass, respectively.

The screen 54 as the optical element may not be provided to the nozzle inspection devices 5, 5A, 5B, and 5D. For example, the screen 54 may be provided on the side of the processing table 16, and may be configured such that the inspection main body units 52 and 52D are moved to a position at which the optical axis of the image pickup device 58 and the optical axis CL1 of the screen 54 are aligned with each other at the time of the inspection.

### (United States Designation)

In connection with United States designation, the present international patent application claims the benefit of priority under 35 U.S.C. 119(a) to Japanese Patent Application No. 2020-173386 filed on October 14, 2020 and Japanese Patent Application No. 2021-079943 filed on May 10, 2021, the disclosed contents of which are cited herein.

## Claims

1. A laser processing device comprising:
a laser processing head;
a nozzle attached to the laser processing head and including an emission hole through which a laser beam is emitted;
an optical element configured to directly face the emission hole when the laser processing head is at an inspection position;
a nozzle inspection device including an image pickup device configured to pick up, through the optical element, an image of the emission hole viewed from a direction of an optical axis of the laser beam;
a gas blowing unit configured to blow a gas toward the optical element; and
an operation control unit configured to cause the gas to be blown from the gas blowing unit toward the optical element before the image pickup device picks up the image of the laser processing head at the inspection position.

2. The laser processing device according to claim 1, wherein the gas is an assist gas.

3. The laser processing device according to claim 1, wherein the optical element is configured to convert a near-infrared beam into a visible beam.

4. The laser processing device according to claim 2 or 3, wherein the gas blowing unit is the emission hole or a gas nozzle arranged outside of the laser processing head.

5. The laser processing device according to any one of claims 1 to 4, wherein
the nozzle inspection device includes a cover configured to cover the optical element and the gas blowing unit, and
the operation control unit is configured to cause the optical element and the gas blowing unit to move between an accommodation position at which the optical element and the gas blowing unit are accommodated inside of the cover and an inspection position at which the optical element and the gas blowing unit are protruded from the cover so as to be able to directly face the emission hole.

6. The laser processing device according to claim 5, wherein the operation control unit causes the gas to be blown from the gas blowing unit when at least the optical element is at the inspection position.

7. The laser processing device according to claim 5 or claim 6, wherein in the nozzle inspection device, the cover includes a cover plate configured to cover only the optical element when the optical element and the gas blowing unit are at the accommodation position.

8. A nozzle inspection method of inspecting, with a nozzle inspection device, a nozzle attached to a laser processing head and including an emission hole through which a laser beam is emitted, the nozzle inspection method comprising:
making the nozzle inspection device include an optical element directly facing the emission hole when the laser processing head is moved to a predetermined position and an image pickup device configured to pick up, through the optical element, an image of the emission hole viewed from a direction of an optical axis of the laser beam;
causing a gas to be blown toward the optical element from the emission hole or a gas nozzle arranged outside of the laser processing head after the laser processing head is moved to the predetermined position; and
causing the image pickup device to pick up the image after causing the gas to be blown.

9. The nozzle inspection method according to claim 8, wherein the laser processing head is moved to the predetermined position after the gas is blown from the emission hole.

10. The nozzle inspection method according to claim 8 or 9, wherein an assist gas used for laser processing by the laser processing head is used as the gas.

11. A nozzle inspection method of inspecting, with a nozzle inspection device, a nozzle attached to a laser processing head and including an emission hole through which a laser beam is emitted, the nozzle inspection method comprising:
making the nozzle inspection device include an optical element directly facing the emission hole when the laser processing head is moved to a predetermined position, an image pickup device configured to pick up, through the optical element, an image of the emission hole viewed from a direction of an optical axis of the laser beam, and a cover configured to cover the optical element, and also making the nozzle inspection device movable between an accommodation position at which the optical element is accommodated inside of the cover and an inspection position corresponding to the predetermined position at which the optical element is protruded from the cover;
blowing a gas from a gas blowing unit toward the optical element when at least the optical element is at the inspection position; and
causing the image pickup device to pick up the image after the laser processing head is moved to the predetermined position and the gas is blown.
